# EUROPEAN PATENT APPLICATION

(11) **EP 4 667 275 A1**
(43) Date of publication of application: **24.12.2025**
(21) Application number: 25183520.3
(22) Date of filing: 18.06.2025
(51) Int. Cl.: B60L 15/20, B60L 1/00

(54) **ELECTRIC VEHICLE, CONTROL METHOD, AND CONTROL PROGRAM**

(30) Priority: 21.06.2024 JP 2024100149
(71) Applicant: TOYOTA JIDOSHA KABUSHIKI KAISHA, Toyota-shi, Aichi-ken 471-8571 (JP)
(72) Inventor: KANZAKI, Kentaroh, TOYOTA-SHI, AICHI-KEN, 471-8571 (JP); ISAMI, Yoichiro, TOYOTA-SHI, AICHI-KEN, 471-8571 (JP); IMAMURA, Tatsuya, TOYOTA-SHI, AICHI-KEN, 471-8571 (JP); MOTEKI, Taro, TOYOTA-SHI, AICHI-KEN, 471-8571 (JP)
(74) Representative: Cabinet Beau de Loménie

(57) **Abstract**

An electric vehicle (100) having an electric motor (4F, 4R) as a drive source includes one or more processors (102) configured to generate an artificial sound in conjunction with required torque for a drive system of the electric vehicle (100) and to output the artificial sound from a speaker (21) mounted on the electric vehicle (100). In a first mode, the one or more processors (102) are further configured to generate the artificial sound in conjunction with first required torque being independent of an operation amount of an accelerator operation device (22) of the electric vehicle (100).

## Description

### TECHNICAL FIELD

The present disclosure relates to an electric vehicle having an electric motor as a drive source.

### BACKGROUND ART

Patent Literature 1 discloses a vehicle control device that generates a sound, which is emitted when a virtual vehicle with a virtual engine as a driving source travels, in a vehicle cabin of a real vehicle having an electric motor (rotating machine) as a driving source. The control device disclosed in Patent Literature 1 estimates a load applied to a virtual engine when the virtual engine is controlled based on a driving operation including an accelerator operation, and estimates a sound emitted when the virtual engine is controlled to have the estimated load.

### List of Related Art

Patent Literature 1: Japanese Patent Application Laid-Open No. 2022 - 036005

### SUMMARY

The sound that a driver feels while a vehicle is traveling is one of the things to give the driver pleasure of driving the vehicle. On the other hand, in an electric vehicle using an electric motor as a drive source, the driving sound of the electric motor is small, and thus the sound the driver feels during the traveling of the electric vehicle is small. Therefore, as disclosed in Patent Literature 1, it has been conventionally considered to output an artificial sound from a speaker, the artificial sound changing in accordance with an operation amount of an accelerator operation device of an electric vehicle. The operation amount of the accelerator operation device is equivalent to a required torque for the drive system of the electric vehicle. Therefore, the artificial sound that changes in accordance with the operation amount of the accelerator operation device is output, and thus the driver can enjoy the sound reflecting the driving state of the electric vehicle.

However, the electric vehicle may be driven in accordance with the required torque that does not depend on the operation amount of the accelerator operation device. For example, the control function for instructing the required torque to the drive system is activated. In such a case, there has conventionally been a gap between the driving state of the electric vehicle and the artificial sound to be output, which leads to the driver's sense of discomfort.

The present disclosure has been made in view of the problem. An object of the present disclosure is to provide a technique to reduce the sense of discomfort when the artificial sound corresponding to the driving state of the electric vehicle is emitted, even if the required torque that does not depend on the operation amount of the accelerator operation device is generated.

One aspect of the present disclosure relates to an electric vehicle having an electric motor as a drive source. The electric vehicle includes processing circuitry configured to generate an artificial sound in conjunction with required torque for a drive system of the electric vehicle and to output the artificial sound from a speaker mounted on the electric vehicle. In a first mode, the processing circuitry is further configured to generate the artificial sound in conjunction with first required torque being independent of an operation amount of an accelerator operation device of the electric vehicle.

According to the present disclosure, when the first required torque that is independent of the operation amount of the accelerator operation device is generated, the artificial sound conjunction with the first required torque can be output from the speaker in the first mode. Thus, even when the first required torque independent of the operation amount of the accelerator operation device is generated, it is possible to output the artificial sound according to the driving state of the electric vehicle. As a result, it is possible to reduce the sense of discomfort when the artificial sound corresponding to the driving state of the electric vehicle is generated.

### BRIEF DESCRIPTION OF DRAWINGS

FIG. 1 is a diagram schematically showing a configuration of an electric vehicle according to an embodiment;
FIG. 2 is a diagram showing a functional configuration of a control device related to drive control of the electric vehicle;
FIG. 3 is a diagram showing an example of a configuration of a vehicle model;
FIG. 4 is a block diagram showing a comparative example of a functional configuration of the control device related to sound control;
FIG. 5 is a time chart showing an example of the sound control by the control device according to a comparative example;
FIG. 6 is a block diagram showing a functional configuration of the control device related to the sound control according to the embodiment;
FIG. 7 is a flowchart showing a processing flow of a mode selection process executed by a sound generation parameter acquisition unit shown in FIG. 6;
FIG. 8 is a block diagram showing an example of output of a sound generation parameter by the sound generation parameter acquisition unit shown in FIG. 6;
FIG. 9 is a time chart showing an example of the sound control by the control device according to the embodiment.

### DETAILED DESCRIPTION

Hereinafter, embodiments of the present disclosure will be described with reference to the drawings. In the drawings, the identical or corresponding components are denoted by the identical reference numerals, and the description thereof will be simplified or omitted.

### 1. CONFIGURATION OF DRIVE SYSTEM OF ELECTRIC VEHICLE

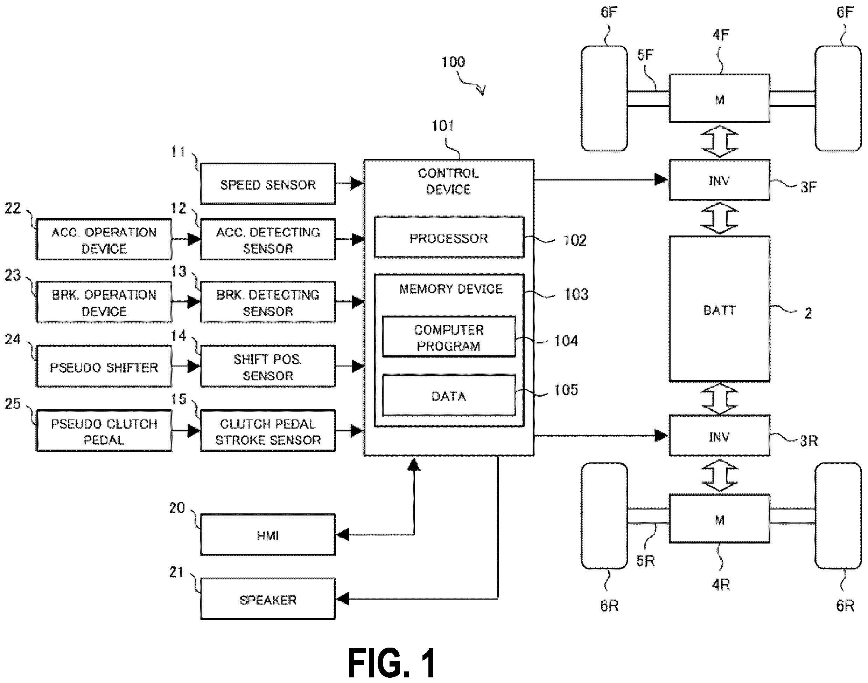

FIG. 1 is a schematic diagram showing a configuration of an electric vehicle 100 according to the present embodiment. First, the configuration of a drive system of the electric vehicle 100 will be described with reference to FIG. 1.

The electric vehicle 100 includes two electric motors (M) 4F and 4R as drive sources at the front and the rear. The electric motors 4F, 4R are, for example, three phase alternating current motors. Inverters (INV) 3F and 3R are attached to the front electric motor 4F and the rear electric motor 4R, respectively. The front electric motor 4F is provided to drive the front wheels 6F and is connected to the front drive shaft 5F via a reduction gear and a differential mechanism. The rear electric motor 4R is provided to drive the rear wheel 6R and is connected to the rear drive shaft 5R via a reduction gear and a differential mechanism. The front electric motor 4F and the front inverter 3F, and the rear electric motor 4R and the rear inverter 3R, may each be integrally designed as e-axles.

The front and rear inverters 3F and 3R are connected to a battery (BATT) 2. That is, the electric vehicle 100 is a battery electric vehicle (BEV) that travels with electric energy stored in the battery 2. The inverters 3F and 3R are, for example, voltage-type inverters, and control the torques of the electric motors 4F and 4R by pulse width modulation (PWM) control.

### 2. CONFIGURATION OF CONTROL SYSTEM OF ELECTRIC VEHICLE

Secondly, a configuration of a control system of the electric vehicle 100 will be described with reference to FIG. 1.

The electric vehicle 100 includes a vehicle speed sensor 11. At least one of wheel speed sensors (not shown) provided on the left and right front wheels 6F and the left and right rear wheels 6R are used as the vehicle speed sensor 11.

The electric vehicle 100 further includes an accelerator operation amount detecting sensor 12. The accelerator operation amount detecting sensor 12 is provided in the accelerator operation device 22. The accelerator operation device 22 is a device operated to drive the electric vehicle 100. Typically, the accelerator operation device 22 is an accelerator pedal. In addition, the accelerator operation device 22 may be a lever-type operation device or a dial-type operation device operated by hand. The accelerator operation amount detecting sensor 12 outputs a signal indicating the operation amount of the accelerator operation device 22. Typically, the accelerator operation amount detecting sensor 12 is an accelerator pedal stroke sensor that outputs a signal indicating accelerator opening of the accelerator pedal.

The electric vehicle 100 further includes a brake operation amount detecting sensor 13. The brake operation amount detecting sensor 13 is provided in the brake operation device 23. The brake operation device 23 is a device operated to brake the electric vehicle 100. Typically, the brake operation device 23 is a brake pedal. In addition, the brake operation device 23 may be a lever-type operation device or a dial-type operation device operated by hand. The brake operation amount detecting sensor 13 outputs a signal indicating the operation amount of the brake operation device 23. Typically, the brake operation amount detecting sensor 13 is a brake pedal stroke sensor that outputs a signal indicating brake opening of the brake pedal.

The accelerator operation device 22 and the brake operation device 23 are driving operation members used for driving the electric vehicle 100. In addition to these driving operation members, the electric vehicle 100 includes a pseudo gear shift operation member that imitates a gear shift member used for a gear shift operation of a manual transmission engine vehicle (a vehicle having an internal combustion engine as a drive source). The pseudo gear shift operation member includes a pseudo shifter 24 and a pseudo clutch pedal 25.

The pseudo shifter 24 is, for example, a pseudo H-type shifter which imitates an H-type shifter. The pseudo H-type shifter has a structure similar to a shift stick provided on a console, and is configured to be movable along an H-type gate between several shift positions. Alternatively, the pseudo shifter 24 may be a pseudo sequential shifter that simulates a sequential shifter. The pseudo shifter 24 includes a shift position sensor 14. The shift position sensor 14 outputs a signal indicating the shift position selected by the pseudo shifter 24. For example, the shift positions selectable by the pseudo shifter 24 include neutral, 1st, 2nd, 3rd, 4th, 5th, and 6th.

The pseudo clutch pedal 25 has a structure similar to a clutch pedal provided in a conventional manual transmission engine vehicle. For example, the pseudo clutch pedal 25 includes a reaction force mechanism that generates a reaction force against the driver's pedaling. The position of the pseudo clutch pedal 25 without any pedaling force applied is the start position of the pseudo clutch pedal 25, and the position of the pseudo clutch pedal 25 with the pseudo clutch pedal 25 fully pedaled is the end position of the pseudo clutch pedal 25. The driver can operate the pseudo clutch pedal 25 from the start position to the end position against the reaction force from the reaction force mechanism. The pseudo clutch pedal 25 includes a clutch pedal stroke sensor 15. The clutch pedal stroke sensor 15 outputs a signal indicating the amount of pedaling on the pseudo clutch pedal 25.

The pseudo clutch pedal 25 is a pedal-type operation device operated by a foot, but a lever-type operation device or a dial-type operation device operated by a hand may be provided as a pseudo clutch operation device. The pseudo clutch operation device enables the driver to operate it from the start position to the end position against the reaction force, and can have a variety of structures, as long as the driver experiences the operational feeling as if he/ she operates the clutch pedal provided in the conventional manual transmission engine vehicle with his/ her foot or hand.

The electric vehicle 100 also includes a human machine interface (HMI) 20. The HMI 20 presents various kinds of information to a user by displaying or sounding, and receives various kinds of input from the user. The HMI 20 may be configured with a display (e.g., a multi-information display, a meter display), a switch, a microphone, a touch pad, a touch screen, etc. For example, the HMI 20 displays various kinds of information on a display and receives an input from a user with respect to what the display shows by operating a switch. As another example, the HMI 20 displays various kinds of information on a touch screen and receives an input from the user with respect to what the display shows by touching on the touch screen.

The electric vehicle 100 includes one or more speakers 21. The speaker 21 is, for example, an in-vehicle speaker that outputs sound to inside the electric vehicle 100. As another example, the speaker 21 may be an external speaker that outputs sound to outside the electric vehicle 100. The electric vehicle 100 may include both the in-vehicle speaker and the vehicle exterior speaker as the speaker 21. The speaker 21 may be configured as a part of the HMI 20.

The electric vehicle 100 includes a control device 101. Various sensors and devices to be controlled mounted on the electric vehicle 100 are connected to the control device 101 via an in-vehicle network such as a control area network (CAN). Various sensors, such as the vehicle speed sensor 11, the accelerator operation amount detecting sensor 12, the brake operation amount detecting sensor 13, the shift position sensor 14, and the clutch pedal stroke sensor 15 may be mounted on the electric vehicle 100 and connected to the control device 101 via an in-vehicle network. The various sensors may include a rotation speed sensor that outputs a signal indicating the number of rotations of the electric motor 4F and 4R.

The control device 101 generates control signals for various controls of the electric vehicle 100 based on signals acquired from the sensors. The control device 101 is typically an electronic control unit (ECU). The control device 101 may be a combination of a plurality of ECUs. The control device 101 includes one or more processors 102 (hereinafter, simply referred to as a processor 102) and one or more storage devices 103 (hereinafter, simply referred to as a storage device 103).

The processor 102 executes various processes. The processor 102 is configured by, for example, a general-purpose processor, a special-purpose processor, a central processing unit (CPU), a graphics processing unit (GPU), an application specific integrated circuit (ASIC), a field-programmable gate array (FPGA), an integrated circuit, a conventional circuit, or a combination of one or more of these. The processor 102 may also be referred to as circuitry or processing circuitry. The circuitry is hardware programmed to implement the functions of the control device 101 or to perform the functions of the control device 101.

The storage device 103 stores various kinds of information necessary for the processor 102 to execute processing. The storage device 103 is configured by a recording medium such as a random-access memory (RAM), a read only memory (ROM), a solid-state drive (SSD), or a hard disk drive (HDD). The storage device 103 stores a computer program 104 executable by the processor 102 and various data 105. The computer program 104 is configured by a plurality of instruction codes describing processes to be executed by the processor 102. The computer program 104 is recorded in a computer-readable recording medium. The functions of the control device 101 are realized by cooperation with the processor 102, that executes the computer program 104, and the storage device 103.

### 3. DRIVING CONTROL OF ELECTRIC VEHICLE

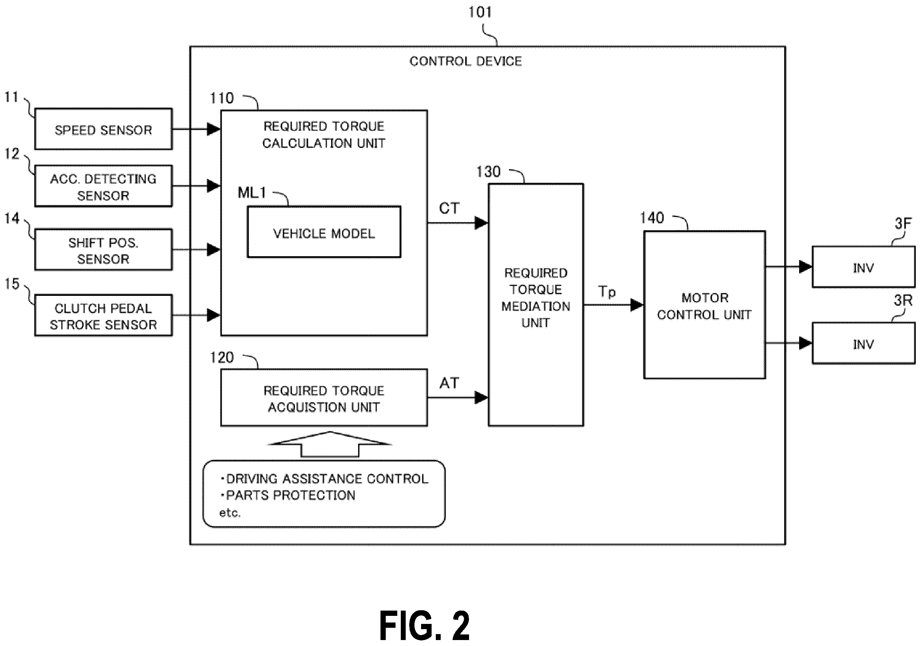

The control device 101 controls the electric motors 4F and 4R to perform drive control of the electric vehicle 100. FIG. 2 is a block diagram showing a functional configuration of the control device 101 related to drive control of the electric vehicle 100. The control device 101 includes, as functional blocks, a required torque calculation unit 110, a required torque acquisition unit 120, a required torque mediation unit 130, and a motor control unit 140. These functional blocks are realized by cooperation with the processor 102 and the storage device 103. Information necessary for executing the processing is stored in the storage device 103 as data 105.

The required torque calculation unit 110 calculates a required torque CT for the drive system of the electric vehicle 100 in response to the accelerator operation device 22 and the operations of the pseudo shifter 24 and the pseudo clutch pedal 25. The required torque calculation unit 110 receives signals from the vehicle speed sensor 11, the accelerator operation amount detecting sensor 12, the shift position sensor 14, and the clutch pedal stroke sensor 15.

In the present embodiment, the drive control of the electric vehicle 100 by the control device 101 is performed so as to simulate the drive characteristics of a virtual vehicle, that is a manual transmission engine vehicle. Therefore, the vehicle model ML1 obtained by modeling the virtual vehicle to be simulated is used for the calculation of the required torque CT by the required torque calculation unit 110.

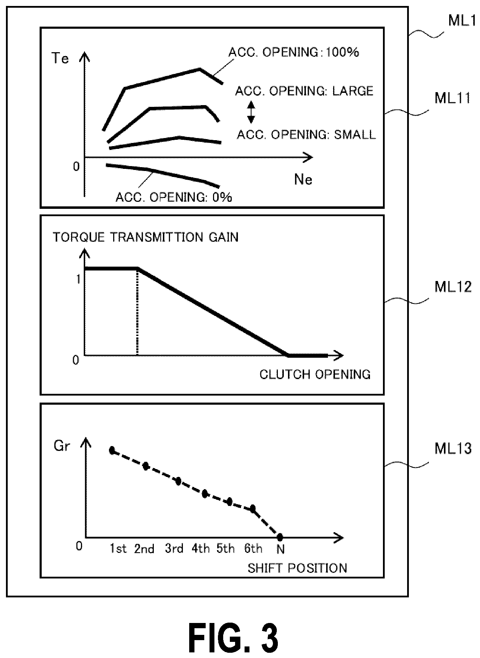

As shown in FIG. 3, the vehicle model ML1 includes an engine model ML11, a clutch model ML12, and a transmission model ML13. In the engine model ML11, a virtual engine of the virtual vehicle is modeled. In the clutch model ML12, a virtual clutch of the virtual vehicle is modeled. In the transmission model ML13, a virtual transmission of the virtual vehicle is modeled. The vehicle model ML1 can also be referred to as a plant model of a virtual powertrain of the virtual vehicle. The vehicle model ML1 is generated in advance and stored in the storage device 103 as the data 105. In particular, a plurality of vehicle model ML1, corresponding to a plurality of types of virtual vehicles, may be stored in the storage device 103. The required torque calculation unit 110 may read the vehicle model ML1 to be used from the plurality of vehicle model ML1. The control device 101 may receive a selection input from the user who selects one of the plurality of types of virtual vehicles via the HMI 20. In this case, the required torque calculation unit 110 may be configured to read the vehicle model ML1 corresponding to the selected virtual vehicle.

The engine model ML11 calculates a virtual engine speed Ne and a virtual engine torque Te. The virtual engine speed Ne is calculated from the output shaft rotation speed and the gear ratio Gr of the virtual transmission. The output shaft rotation speed of the virtual transmission is calculated from the vehicle speed and the reduction ratio determined by the mechanical structure from the virtual transmission to the drive wheels. Alternatively, the output-shaft rotation speed of the virtual transmission may be calculated from the motor rotational speeds of the electric motors 4F and 4R. In the engine model ML11, the relation between the virtual engine speed Ne and the virtual engine torque Te is defined for each operation amount (for example, accelerator opening) of the accelerator operation device 22. That is, the virtual engine torque Te is calculated from the operation amount of the accelerator operation device 22 and the virtual engine speed Ne. When the virtual engine and the virtual transmission are in a power interruption state (for example, when the shift position is changed by the pseudo-shifter 24), the engine model ML11 calculates the virtual engine speed Ne from the current virtual engine torque Te and the specification information of the virtual engine.

The clutch model ML12 calculates a torque transmission gain. The torque transmission gain is a gain for calculating the torque transmission level of the virtual clutch according to the clutch opening. In the clutch model ML12, the torque transmission gain is given corresponding to the clutch opening. The torque transmission gain is converted into a clutch torque capacity of the virtual clutch (virtual clutch torque capacity). Then, the virtual clutch torque input from the virtual clutch to the virtual transmission is calculated based on a comparison between the virtual clutch torque capacity and the virtual engine torque calculated by the engine model ML11.

The transmission model ML13 calculates the gear ratio Gr. The gear ratio Gr is set for each shift position. In the example shown in FIG. 3, the maximum gear ratio is set for 1st, and the gear ratio Gr is set to be smaller in the order of 2nd, 3rd, 4th, 5th, and 6th. The shift position is determined by a signal from the shift position sensor 14. The transmission model ML13 further calculates the torque output from the virtual transmission by using the gear ratio Gr and the virtual clutch torque.

The output torque of the virtual transmission is the required torque CT calculated by the required torque calculation unit 110. In this way, the required torque calculation unit 110 calculates the required torque CT using the vehicle model ML1. As described above, the required torque CT depends on the operation amount of the accelerator operation device 22.

The electric vehicle 100 has various control functions for instructing the required torque for the drive system. For example, the electric vehicle 100 has a control function related to driving assistance control. Examples of the driving assistance control include an advanced emergency braking system (AEBS), a lane keeping assist system (LKAS), and an adaptive cruise control (ACC). For example, the electric vehicle 100 has a control function related to component protection. Examples of the component protection include suppression of an excessive temperature rise of the battery 2, the electric motor 4F and 4R, and suppression of an excessive current flowing through the electric motor 4F and 4R. When these control functions are activated, the required torque is instructed in accordance with the purpose of the control. Typically, the required torque is instructed to be limited to a value equal to or less than a certain value. For example, when the AEBS is activated, the required torque is instructed so that the electric vehicle 100 decelerates. The required torque instructed by the activation of the control function can be said to be a required torque independent of the operation amount of the accelerator operation device 22.

The required torque acquisition unit 120 obtains the required torque AT independent of the operation amount of the accelerator operation device 22. In the following description, the required torque AT acquired by the required torque acquisition unit 120 is referred to as "first required torque AT". The required torque CT calculated by the required torque calculation unit 110 is referred to as "second required torque CT".

The required torque mediation unit 130 mediates the first required torque AT and the second required torque CT, and outputs a required torque Tp after mediation (hereinafter, referred to as a "final required torque Tp"). As described above, the first required torque AT is generated when the control function is activated. It is important to appropriately activate the control function from the viewpoint of safety of the electric vehicle 100. Therefore, the required torque mediation unit 130 mediates between the first required torque AT and the second required torque CT so as to prioritize the first required torque AT. That is, when the first required torque AT is generated (when the control function is activated), the required torque mediation unit 130 outputs the first required torque AT as the final required torque Tp. On the other hand, when the first required torque AT is not generated (when the control function is inactivated), the required torque mediation unit 130 outputs the second required torque CT as the final required torque Tp. When the first required torque AT is generated (when the operation of the control function is started), the required torque mediation unit 130 may gradually change the final required torque Tp from the second required torque CT to the first required torque AT. Similarly, when the generation of the first required torque AT is terminated (when the operation of the control function ended), the required torque mediation unit 130 may gradually change the final required torque Tp from the first required torque AT to the second required torque CT.

The motor control unit 140 acquires the final required torque Tp output from the required torque mediation unit 130. The motor control unit 140 controls the electric motors 4F and 4R via the inverters 3F and 3R so that the electric vehicle 100 is driven with the acquired final required torque Tp. Thus, when the final required torque Tp is the second required torque CT, the electric vehicle 100 is driven so as to simulate the driving characteristics of the virtual vehicle represented by the vehicle model ML1. When the final required torque Tp is the first required torque AT, the driving control of the electric vehicle 100 by the control function is realized.

### 4. SOUND CONTROL

The control device 101 performs sound control for controlling sound output from the speaker 21. In particular, in the sound control, the control device 101 generates an artificial sound in conjunction with the required torque for the drive system of the electric vehicle 100, and outputs the generated artificial sound from the speaker 21. The artificial sound is, for example, a "simulated engine sound" simulating an engine sound of a virtual engine of the virtual vehicle. However, in the present embodiment, the artificial sound output from the speaker 21 by the sound control is not limited to the simulated engine sound. For example, the artificial sound may be a simulated driving sound simulating a driving sound of a moving body (e.g., a train, an airplane, etc.) different from vehicles. As another example, the artificial sound may be music.

### 4.1 Comparative Example

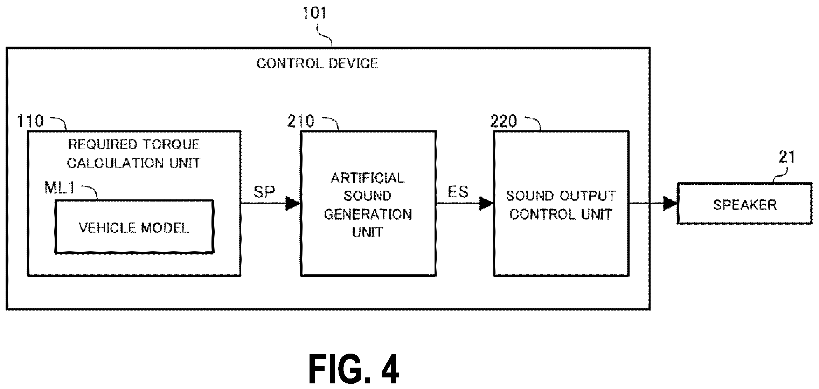

FIG. 4 is a block diagram showing a comparative example of the functional configuration of the control device 101 related to sound control, which is compared with the present embodiment. In the comparative example shown in FIG. 4, the control device 101 includes a required torque calculation unit 110, an artificial sound generation unit 210, and a sound output control unit 220 as functional blocks. These functional blocks are realized by cooperation with the processor 102 and the storage device 103.

The artificial sound generation unit 210 (artificial sound simulator) is a simulator that generates the artificial sound. In the comparative example shown in FIG. 4, the artificial sound generation unit 210 acquires a sound generation parameter SP that defines the characteristics of the artificial sound (for example, sound pressure, frequency, etc.) from the required torque calculation unit 110. When the artificial sound is a simulated engine sound, the sound generation parameter SP is typically the virtual engine torque Te and the virtual engine speed Ne. The virtual engine torque Te and the virtual engine speed Ne are calculated in the engine model ML11. The sound generation parameter SP may be configured as appropriate according to the artificial sound to be generated. For example, the sound generation parameter SP may be the second required torque CT calculated by the required torque calculation unit 110.

The artificial sound generation unit 210 generates an artificial sound corresponding to the sound generation parameter SP using the acquired sound generation parameter SP and sound source. For example, a case is considered where the artificial sound is a simulated engine sound, and the virtual engine speed Ne and the virtual engine torque Te are the sound generation parameter SP. At this time, the artificial sound generation unit 210 generates the simulated engine sound in which the sound pressure is increased or decreased in proportion to the virtual engine torque Te and the frequency is increased or decreased in proportion to the virtual engine speed Ne. The sound source is stored in the data 105 in the storage device 103. In particular a plurality of sound sources may be stored in the storage device 103. The artificial sound generation unit 210 may read the sound source to be used from among the plurality of sound sources. For example, the artificial sound generation unit 210 may be configured to read a sound source corresponding to the vehicle model ML1 used by the required torque calculation unit 110. The artificial sound generation unit 210 outputs artificial sound data ES indicating the generated artificial sound.

The sound output control unit 220 acquires the artificial sound data ES generated by the artificial sound generation unit 210. The sound output control unit 220 outputs the artificial sound from the speaker 21.

In this way, in the comparative example, the artificial sound in conjunction with the required torque for the drive system of the electric vehicle 100 is generated and output from the speaker 21. In particular, in the comparative example, the artificial sound in conjunction with the second required torque CT calculated by the required torque calculation unit 110 is generated and output from the speaker 21. The second required torque CT is a required torque that depends on the operation amount of the accelerator operation device 22. The artificial sound in conjunction with the required torque for the drive system of the electric vehicle 100 is output from the speaker 21, so that the driver can enjoy the sound according to the driving state of the electric vehicle 100.

However, as described in Section 3, when the control function of the electric vehicle 100 is activated, the electric vehicle 100 is driven in accordance with the first required torque AT, which is different from the second required torque CT. The first required torque AT is a required torque independent of the operation amount of the accelerator operation device 22. Therefore, in the comparative example, when the control function of the electric vehicle 100 is activated (when the first required torque AT is generated), a discrepancy between the driving state of the electric vehicle 100 and the artificial sound to be output may occur, which may give a sense of discomfort to the driver.

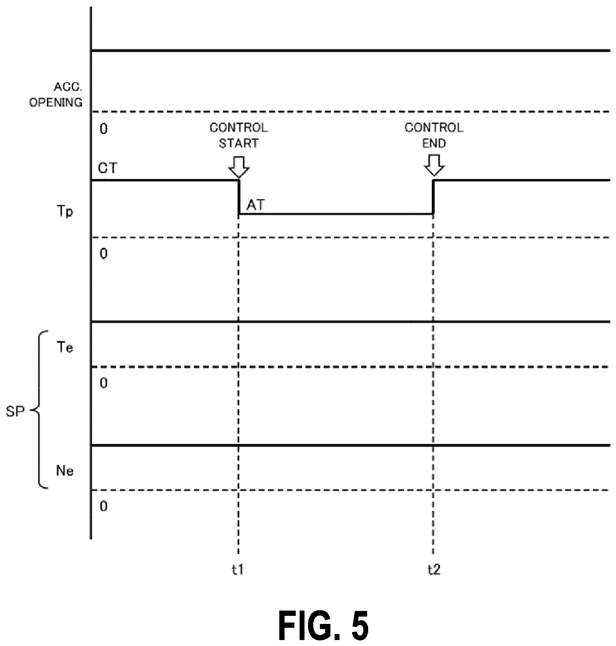

FIG. 5 is a time chart showing an example of sound control by control device 101 according to the comparative example. The example shown in FIG. 5 shows a case where the driver holds the operation amount (accelerator opening) of the accelerator operation device 22 constant. Therefore, the second required torque CT is constant. In the example shown in FIG. 5, the sound generation parameter SP is the virtual engine torque Te and the virtual engine speed Ne. In the example shown in FIG. 5, the operation of the control function is started at the time t1, and the operation of the control function is ended at the time t2. Therefore, the final required torque Tp is the first required torque AT from the time t1 to the time t2. That is, during the period from the time t1 to the time t2, the electric vehicle 100 is driven in accordance with the first required torque AT. On the other hand, in the comparative example, the artificial sound in conjunction with the second required torque CT is generated also during the period from the time t1 to the time t2. The example shown in FIG. 5 shows that the virtual engine torque Te and the virtual engine speed Ne, which are the sound generation parameter SP, do not change over the period from the time t1 to the time t2. As a result, the discrepancy between the driving state of the electric vehicle 100 and the artificial sound to be output occurs between the time t1 and the time t2.

As described above, in the comparative example, the discrepancy between the driving state of the electric vehicle 100 and the artificial sound to be output may occur, which may give a sense of discomfort to the driver. Therefore, the present embodiment proposes a control device 101 that can output an artificial sound that does not give a sense of discomfort to the driver even when the first required torque AT is generated. The sound control by the control device 101 according to the present embodiment will be described below.

### 4.2 Functional Configuration

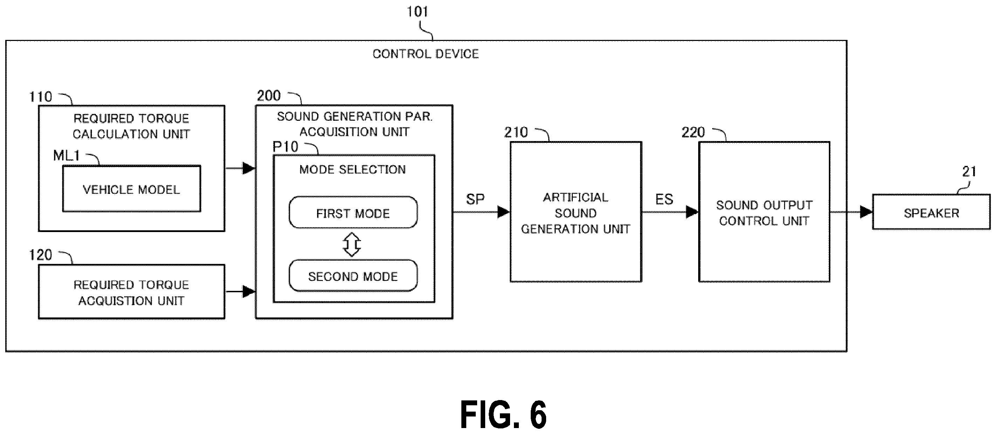

FIG. 6 is a block diagram showing a functional configuration of a control device 101 related to sound control according to the present embodiment. The functional configuration shown in FIG. 6 further includes the required torque acquisition unit 120 and a sound generation parameter acquisition unit 200 as functional blocks in addition to the comparative example shown in FIG. 4. These functional blocks are realized by cooperation with the processor 102 and the storage device 103.

In the functional configuration shown in FIG. 6, the artificial sound generation unit 210 is configured to acquire the sound generation parameter SP from the sound generation parameter acquisition unit 200. The sound generation parameter acquisition unit 200 generates and outputs a sound generation parameter SP through communication with the required torque calculation unit 110 and the required torque acquisition unit 120. The sound generation parameter acquisition unit 200 has two modes for the sound generation parameter SP to be output: a "first mode" and a "second mode".

In the first mode, the sound generation parameter acquisition unit 200 outputs a sound generation parameter SP for causing the artificial sound generation unit 210 to generate an artificial sound in conjunction with the first required torque AT acquired by the required torque acquisition unit 120. On the other hand, in the second mode, the sound generation parameter acquisition unit 200 outputs the sound generation parameter SP for causing the artificial sound generation unit 210 to generate the artificial sound in conjunction with the second required torque CT calculated by the required torque calculation unit 110. An example of the sound generation parameter SP generated in each of the first mode and the second mode will be described later.

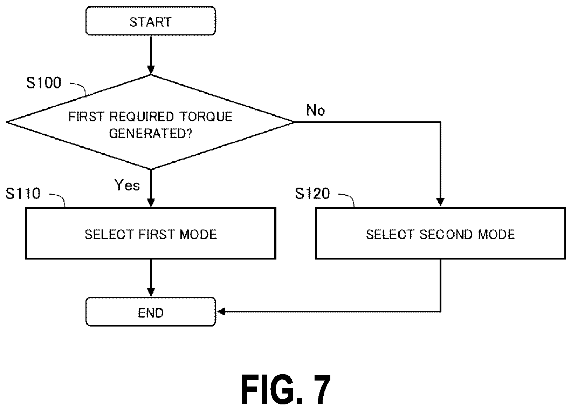

The sound generation parameter acquisition unit 200 selects one of the first mode and the second mode by executing the mode selection process P10. FIG. 7 is a flowchart showing a process flow of the mode selection process P10. The process flow shown in FIG. 7 is repeatedly executed at a predetermined process cycle.

In the mode selection process P10, the sound generation parameter acquisition unit 200 first determines whether the first required torque AT is being generated through communication with the required torque acquisition unit 120 (step S100). When the first required torque AT is generated (step S100; Yes), the sound generation parameter acquisition unit 200 selects the first mode (step S110). On the other hand, when the first required torque AT is not generated (step S100; No), the sound generation parameter acquisition unit 200 selects the second mode (step S120).

With reference to FIG. 6, the artificial sound generation unit 210 generates the artificial sound corresponding to the sound generation parameter SP using the sound generation parameter SP and the sound source acquired from the sound generation parameter acquisition unit 200. In particular, when the first mode is selected in the sound generation parameter acquisition unit 200, the artificial sound generation unit 210 generates an artificial sound in conjunction with the first required torque AT. Therefore, at this time, an artificial sound in conjunction with the first required torque AT is output from the speaker 21. On the other hand, when the second mode is selected in the sound generation parameter acquisition unit 200, the artificial sound generation unit 210 generates an artificial sound in conjunction with the second required torque CT. Therefore, at this time, an artificial sound in conjunction with the second required torque CT is output from the speaker 21.

As described above, according to the present embodiment, the sound generation parameter acquisition unit 200 has the first mode for causing the artificial sound generation unit 210 to generate the artificial sound in conjunction with the first required torque AT. Thus, when the first required torque AT is generated, the artificial sound in conjunction with the first required torque AT can be output from the speaker 21 following the first mode. In this way, the control device 101 according to the present embodiment can output the artificial sound according to the driving state of the electric vehicle even when the first required torque AT is generated. As a result, the sense of discomfort given to the driver can be reduced. The control method according to the present embodiment is realized by the processing executed by the control device 101 in this way. The control program according to the present embodiment is realized by the computer program 104 that causes the control device 101 to execute the process in this way.

### 4.3 Specific Example of Sound Generation Parameter

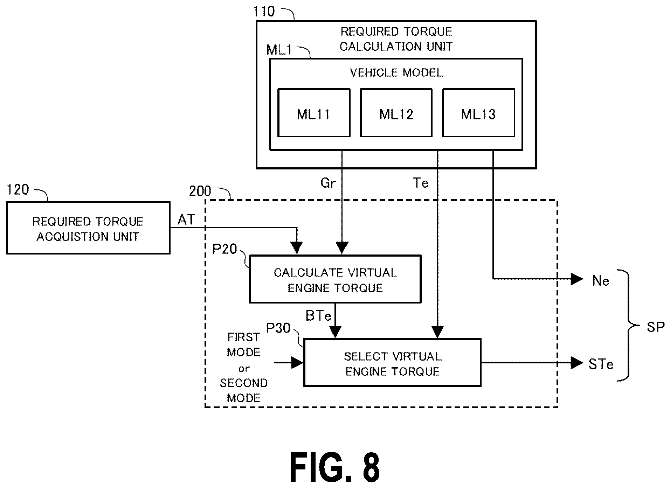

FIG. 8 is a block diagram showing an example of the output of the sound generation parameter SP by the sound generation parameter acquisition unit 200. In the example shown in FIG. 8, the artificial sound is a simulated engine sound. In the example shown in FIG. 8, the sound generation parameter acquisition unit 200 first executes a process P20 based on the first required torque AT and the gear ratio Gr. The first required torque AT is acquired from the required torque acquisition unit 120. The gear ratio Gr is calculated in the transmission model ML13 and is acquired from the required torque calculation unit 110. In the process P20, the engine torque BTe of the virtual engine is calculated so that the torque output from the virtual transmission is equal to the first required torque AT. That is, BTe = AT/ Gr. Hereinafter, the engine torque BTe of the virtual engine calculated by the process P20 is referred to as "first virtual engine torque BTe", and the virtual engine torque Te calculated by the engine model ML11 is referred to as "second virtual engine torque Te". The first virtual engine torque BTe is related to the first required torque AT, and the second virtual engine torque Te is related to the second required torque CT.

In the example shown in FIG. 8, the sound generation parameter acquisition unit 200 then executes a process P30 to select one of the first virtual engine torque BTe and the second virtual engine torque Te. When the first mode is selected, the sound generation parameter acquisition unit 200 selects the first virtual engine torque BTe in the process P30. On the other hand, when the second mode is selected, the sound generation parameter acquisition unit 200 selects the second virtual engine torque Te in the process P30. The sound generation parameter acquisition unit 200 outputs the virtual engine torque STe (hereinafter, referred to as a "final virtual engine torque STe") selected at the process P30 and the virtual engine speed Ne as the sound generation parameter SP.

When the first mode is selected, the final virtual engine torque STe is the first virtual engine torque BTe associated with the first required torque AT. Therefore, the sound generation parameter SP according to the first mode causes the artificial sound generation unit 210 to generate the simulated engine sound in conjunction with the first required torque AT. Specifically, the simulated engine sound whose sound pressure changes in conjunction with the first required torque AT is generated. When the second mode is selected, the final virtual engine torque STe is the second virtual engine torque Te related to the second required torque CT. Therefore, the sound generation parameter SP according to the second mode causes the artificial sound generation unit 210 to generate the simulated engine sound in conjunction with the second required torque CT. Specifically, the simulated engine sound whose sound pressure changes in conjunction with the second required torque CT is generated.

As a variation, in the example shown in FIG. 8, the required torque acquisition unit 120 may be replaced with the required torque mediation unit 130. In this case, the sound generation parameter acquisition unit 200 executes process P20 based on the final required torque Tp, acquired from the required torque mediation unit 130, and the gear ratio Gr. That is, BTe = Tp/ Gr. When the first required torque AT is generated, the final required torque Tp becomes the first required torque AT. Therefore, in this case as well, when the first mode is selected, the final virtual engine torque STe is equivalent to the first virtual engine torque BTe. Further, while the required torque mediation unit 130 is performing the gradual change process, the gradual change process can be taken into consideration. For example, when the first mode is switched to the second mode (when the operation of the control function is terminated), the final required torque Tp gradually changes from the first required torque AT to the second required torque CT. Further, when the second mode is switched to the first mode (when the operation of the control function is started), the final required torque Tp gradually changes from the second required torque CT to the first required torque AT.

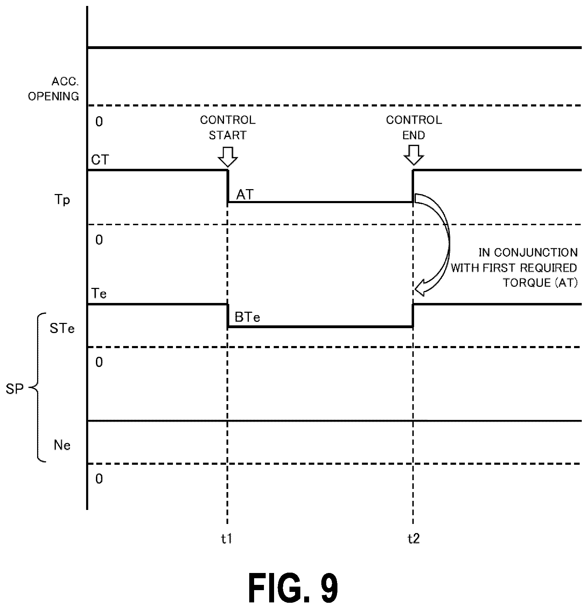

FIG. 9 is a time chart showing an example of sound control by the control device 101 according to the present embodiment based on the configuration of the sound generation parameter acquisition unit 200 shown in FIG. 8. In the example shown in FIG. 9, the driver holds the operation amount (accelerator opening) of the accelerator operation device 22 constant, as in the case shown in FIG. 5. In the example illustrated in FIG. 9, the operation of the control function is started at the time t1, and the operation of the control function is ended at the time t2. Therefore, as in the case shown in FIG. 5, the final required torque Tp is the first required torque AT from the time t1 to the time t2. At this time, as shown in FIG. 9, according to the present embodiment, an artificial sound that is linked to the first required torque AT is generated from time t1 to time t2. FIG. 9 indicates that the final virtual engine torque STe, which is included in the sound generation parameter SP, is equal to the first virtual engine torque BTe that is linked to the first required torque AT from the time t1 to the time t2. As a result, in the example shown in FIG. 9, the artificial sound according to the driving state of the electric vehicle 100 is output also from the time t1 to the time t2. As described above, according to the present embodiment, outputting an artificial sound in accordance with the driving state of the electric vehicle is realized even when the first required torque is generated.

### 5.OTHERS

In the present embodiment, the drive system of the electric vehicle 100 may adopt other configurations. For example, the electric vehicle 100 may be a two-wheel drive vehicle with only one electric motor and only one inverter, wherein the electric motor drives either the front wheels or the rear wheels. Alternatively, the electric vehicle 100 may be a four-wheel drive vehicle with only one electric motor and only one inverter, wherein the output of the electric motor is distributed to the front wheels and the rear wheels by transfer to drive the front wheels and the rear wheels.

In the present embodiment, the pseudo shifter 24 and the pseudo clutch pedal 25 are not essential components. The technical features according to the present embodiment can also be applied to the electric vehicle 100 without the pseudo shifter 24 or the pseudo clutch pedal 25. In this case, the virtual vehicle simulated in the driving control of the electric vehicle 100 may be an automatic transmission engine vehicle.

In the present embodiment, the electric vehicle 100 may have a control mode in which the electric vehicle 100 operates with the driving characteristics of a normal EV.

## Claims

1. An electric vehicle (100) having an electric motor (4F, 4R) as a drive source, the electric vehicle (100) comprising one or more processors (102) configured to generate an artificial sound in conjunction with required torque for a drive system of the electric vehicle (100) and to output the artificial sound from a speaker (21) mounted on the electric vehicle (100), wherein
in a first mode, the one or more processors (102) are further configured to generate the artificial sound in conjunction with first required torque (AT) being independent of an operation amount of an accelerator operation device (22) of the electric vehicle (100).

2. The electric vehicle (100) according to claim 1, wherein
the first required torque (AT) includes the required torque required by operation of driving assistance control of the electric vehicle (100).

3. The electric vehicle (100) according to claim 1 or 2, wherein
in a second mode, the one or more processors (102) are further configured to generate the artificial sound in conjunction with second required torque (CT) that depends on the operation amount of the accelerator operation device (22).

4. The electric vehicle (100) according to claim 3, wherein
the one or more processors (102) are further configured to:
select the first mode when the first required torque (AT) is generated; and
select the second mode when the first required torque (AT) is not generated.

5. The electric vehicle (100) according to claim 4, wherein
the one or more processors (102) are further configured to:
gradually change the required torque from the first required torque (AT) to the second required torque (CT) when the first mode is switched to the second mode; and
gradually change the required torque from the second required torque (CT) to the first required torque (AT) when the second mode is switched to the first mode.

6. The electric vehicle (100) according to any one of claims 1 to 5, wherein
the artificial sound is a simulated engine sound simulating an engine sound of a virtual engine.

7. The electric vehicle (100) according to claim 6, wherein
in the first mode, the one or more processors (102) are configured to:
calculate an engine torque (BTe) of the virtual engine from the first required torque (AT); and
generate the simulated engine sound that changes in accordance with the calculated engine torque (BTe).

8. The electric vehicle (100) according to claim 7, wherein
the one or more processors (102) are further configured to calculate second required torque (CT) that depends on the operation amount of the accelerator operation device (22) so as to simulate driving characteristics of a virtual vehicle including the virtual engine.

9. The electric vehicle (100) according to claim 8, further comprising a pseudo shifter (24) and a pseudo clutch operation device (25), wherein
the one or more processors (102) are further configured to change the second required torque (CT) in accordance with an operation of the pseudo shifter (24) and an operation of the pseudo clutch operation device (25).

10. A control method for controlling an electric vehicle (100) having an electric motor (4F, 4R) as a drive source, the control method comprising:
generating an artificial sound in conjunction with a required torque for a drive system of the electric vehicle (100);
outputting the artificial sound from a speaker (21) mounted on the electric vehicle (100); and
generating the artificial sound in conjunction with first required torque (AT) being independent of an operation amount of an accelerator operation device (22) of the electric vehicle (100) in a first mode.

11. A control program (104) comprising instructions which cause a computer to execute the control method of claim 10.
